# EUROPEAN PATENT APPLICATION

(11) **EP 4 518 420 A1**
(43) Date of publication of application: **05.03.2025**
(21) Application number: 23795219.7
(22) Date of filing: 21.04.2023
(51) Int. Cl.: H04W 28/06

(54) **DATA PROCESSING METHOD AND APPARATUS**

(30) Priority: 27.04.2022 CN 202210468449
(71) Applicant: Vivo Mobile Communication Co., Ltd., Dongguan, Guangdong 523863 (CN)
(72) Inventor: KE, Xiaowan, Dongguan, Guangdong 523863 (CN)
(74) Representative: Conti, Marco
(86) International application number: PCT/CN2023/089779
(87) International publication number: WO 2023/207786

(57) **Abstract**

Embodiments of this application provide a data processing method and apparatus. The data processing method applied to a first communication device includes: performing, by the first communication device, a first operation, where the first operation includes at least one of the following: stopping sending a data packet of a first data set to a first target end or a first target interface; discarding the data packet of the first data set in the first communication device; discarding a data packet of a first data unit not mapped into the first data set in the first communication device; stopping a relevant operation of the first data set; and sending a first indication.

## Description

### CROSS-REFERENCE TO RELATED APPLICATIONS

This application claims priority to Chinese Patent Application No. 202210468449.5 filed in China on April 27, 2022, which is incorporated herein by reference in its entirety.

### TECHNICAL FIELD

Embodiments of this application relate to the field of wireless communication technologies, and in particular, to a data processing method and apparatus.

### BACKGROUND

In the related art, packet loss processing and the like after extended reality (Extended Reality, XR) data packet scheduling fails are discussed. However, a cellular mobile communication system is only a part of a transmission path between a client (Client) and a server (Server). Packet loss at any location on the transmission path causes incomplete data that is received by a device responsible for forwarding data on the transmission path, in other words, there is missing data.

In a scenario with a missing data packet, how to detect data missing and process incomplete received data are urgent problems to be resolved.

### SUMMARY

Embodiments of this application provide a data processing method and apparatus, to resolve a problem of how to detect data missing and process incomplete received data in a scenario with a data packet missing.

To resolve the technical problem above, this application is implemented as follows.

According to a first aspect, a data processing method is provided, including:
performing, by a first communication device, a first operation, where the first operation includes at least one of the following:
stopping sending a data packet of a first data set to a first target end or a first target interface;
discarding the data packet of the first data set in the first communication device;
discarding a data packet of a first data unit not mapped into the first data set in the first communication device;
stopping a relevant operation of the first data set; and
sending a first indication, where the first indication indicates at least one of the following: a data set ending, a data packet carrying the first indication being an end data packet of the data set, the data set being incomplete, and requiring stopping transmission of a data packet of the data set; and the data set is the first data set,
where
the first indication is first indication information corresponding to the first data set; and
the first data set includes one or more data packets.

According to a second aspect, a data processing method is provided, including:
performing, by a second communication device, a second operation, where the second operation includes at least one of the following:
stopping sending a data packet of a third data set to a second target end;
discarding the data packet of the third data set in the second communication device; and
sending a fourth indication, where the fourth indication indicates at least one of the following: a data set ending, a data packet carrying the fourth indication being an end data packet of the data set, the data set being incomplete, and stopping receiving or stopping waiting for the data packet of the data set; and the data set is the third data set,
where
the fourth indication is fourth indication information corresponding to the third data set; and
the third data set includes one or more data packets.

According to a third aspect, a data processing method is provided, including:
obtaining, by a third communication device, a fourth indication; and
performing, by the third communication device, a third operation based on the fourth indication,
where
the third operation includes at least one of the following:
   stopping waiting for a data packet of a third data set;
   notifying an application layer, or decoding, by an application layer, a third data unit; and
   notifying the application layer, or discarding, by the application layer, a data packet of the third data unit,
   where
   the third data unit is a data unit corresponding to the third data set.

According to a fourth aspect, a data processing method is provided, including:
performing, by a fourth communication device, a fourth operation, where the fourth operation includes at least one of the following:
determining at least one of the following: a second indication, first information, a fifth indication, and second information; and
sending at least one of the following: the second indication, the first information, the fifth indication, and the second information,
where
the second indication indicates at least one of the following: all data packets of a first object require complete processing, and all data packets of any data instance of the first object require complete processing; and
the first information includes at least one of the following: a third indication, and range information of a header data packet of the first object requiring complete processing,
where
the third indication indicates that the header data packet of the first object requires complete processing,
where
the first object includes at least one of the following: a first PDU Set, a first quality of service QoS stream, a first QoS sub-stream, a first data set, a second data set, a first data stream, a first data unit, and a second data unit; and
the data instance of the first object includes at least one of the following: a data set, a data unit, the first data set, the second data set, the first data stream, the first data unit, and the second data unit,
where
the fifth indication indicates at least one of the following: all data packets of a second object require complete processing, and all data packets of any data instance of the second object require complete processing; and
the second information includes at least one of the following: a sixth indication, and range information of a header data packet of the second object requiring complete processing,
where
the sixth indication indicates that the header data packet of the second object requires complete processing,
where
the second object includes at least one of the following: a first PDU Set, a first QoS stream, a first QoS sub-stream, a third data set, and a fourth data set, where the fourth data set is a data set on which the third data set depends; and
the data instance of the second object includes at least one of the following: the data set, the third data set, and the fourth data set.

According to a fifth aspect, a data processing apparatus is provided, used in a first communication device and including:
a first execution module, configured to perform a first operation, where the first operation includes at least one of the following:
stopping sending a data packet of a first data set to a first target end or a first target interface;
discarding the data packet of the first data set in the first communication device;
discarding a data packet of a first data unit not mapped into the first data set in the first communication device;
stopping a relevant operation of the first data set; and
sending a first indication, where the first indication indicates at least one of the following: a data set ending, a data packet carrying the first indication being an end data packet of the data set, the data set being incomplete, and requiring stopping transmission of a data packet of the data set; and the data set is the first data set,
where
the first indication is first indication information corresponding to the first data set; and
the first data set includes one or more data packets.

According to a sixth aspect, a data processing apparatus is provided, used in a second communication device and including:
a second execution module, configured to perform a second operation, where the second operation includes at least one of the following:
stopping sending a data packet of a third data set to a second target end;
discarding the data packet of the third data set in the second communication device; and
sending a fourth indication, where the fourth indication indicates at least one of the following: a data set ending, a data packet carrying the fourth indication being an end data packet of the data set, the data set being incomplete, and stopping receiving or stopping waiting for the data packet of the data set; and the data set is the third data set,
where
the fourth indication is fourth indication information corresponding to the third data set; and
the third data set includes one or more data packets.

According to a seventh aspect, a data processing apparatus is provided, used in a third communication device and including:
a second obtaining module, configured to obtain a fourth indication; and
a fourth execution module, configured to perform a third operation based on the fourth indication,
where
the third operation includes at least one of the following:
   stopping waiting for a data packet of a third data set;
   notifying an application layer, or decoding, by an application layer, a third data unit; and
   notifying the application layer, or discarding, by the application layer, a data packet of the third data unit,
   where the third data unit is a data unit corresponding to the third data set.

According to an eighth aspect, a data processing apparatus is provided, used in a fourth communication device and including:
a fifth execution module, configured to perform a fourth operation, where the fourth operation includes at least one of the following:
determining at least one of the following: a second indication, first information, a fifth indication, and second information; and
sending at least one of the following: the second indication, the first information, the fifth indication, and the second information,
where
the second indication indicates at least one of the following: all data packets of a first object require complete processing, and all data packets of any data instance of the first object require complete processing; and
the first information includes at least one of the following: a third indication, and range information of a header data packet of the first object requiring complete processing,
where
the third indication indicates that the header data packet of the first object requires complete processing,
where
the first object includes at least one of the following: a first PDU Set, a first quality of service QoS stream, a first QoS sub-stream, a first data set, a second data set, a first data stream, a first data unit, and a second data unit; and
the data instance of the first object includes at least one of the following: a data set, a data unit, the first data set, the second data set, the first data stream, the first data unit, and the second data unit,
where
the fifth indication indicates at least one of the following: all data packets of a second object require complete processing, and all data packets of any data instance of the second object require complete processing; and
the second information includes at least one of the following: a sixth indication, and range information of a header data packet of the second object requiring complete processing,
where
the sixth indication indicates that the header data packet of the second object requires complete processing,
where
the second object includes at least one of the following: a first PDU Set, a first QoS stream, a first QoS sub-stream, a third data set, and a fourth data set, where the fourth data set is a data set on which the third data set depends; and
the data instance of the second object includes at least one of the following: the data set, the third data set, and the fourth data set.

According to a ninth aspect, an embodiment of this application provides a communication device, including a processor, a memory, and a program or instructions stored on the memory and runnable on the processor, where when the program or the instructions are executed by the processor, the steps of the data processing method according to the first aspect are implemented, or the steps of the data processing method according to the second aspect are implemented, or the steps of the data processing method according to the third aspect are implemented, or the steps of the data processing method according to the fourth aspect are implemented.

According to a tenth aspect, an embodiment of this application provides a readable storage medium, storing a program or instructions, where the program or the instructions, when executed by a processor, the steps of the data processing method according to the first aspect are implemented, or the steps of the data processing method according to the second aspect are implemented, or the steps of the data processing method according to the third aspect are implemented, or the steps of the data processing method according to the fourth aspect are implemented.

According to an eleventh aspect, a chip is provided, where the chip includes a processor and a communication interface, the communication interface is coupled to the processor, and the processor is configured to run a program or instructions to implement the steps of the method according to the first aspect or the second aspect or the third aspect or the fourth aspect.

According to a twelfth aspect, a computer program/program product is provided, where the computer program/program product is stored in a non-transitory storage medium, and the program/program product is executed by at least one processor to implement the steps of the method according to the first aspect or the second aspect or the third aspect or the fourth aspect.

According to a thirteenth aspect, a communication system is provided, where the communication system includes a terminal and a network device, the terminal is configured to perform the steps of the method according to the third aspect, and the network device is configured to perform the steps of the method according to the first aspect or the second aspect or the third aspect or the fourth aspect.

In the embodiments of this application, behaviors of the first communication device, the second communication device, the third communication device, or the fourth communication device in detecting data missing and processing incomplete received data in a scenario with a data packet missing are standardized, and reliability of a communication system is improved.

### BRIEF DESCRIPTION OF THE DRAWINGS

Various other advantages and benefits become clear to a person of ordinary skill in the art by reading the following detailed description of preferred implementations. The accompanying drawings are merely used for illustrating the preferred implementations and are not intended to constitute a limitation on this application. Throughout the accompanying drawings, the same reference numerals are used to represent the same components. In the accompanying drawings:
FIG. 1 is a schematic diagram of transmission from an angle of a UPF;
FIG. 2 is a schematic diagram of transmission from an angle of a RAN;
FIG. 3 is a schematic architectural diagram of a wireless communication system according to an embodiment of this application;
FIG. 4 is a flowchart of a data processing method according to an embodiment of this application;
FIG. 5 is a flowchart of another data processing method according to an embodiment of this application;
FIG. 6 is a flowchart of another data processing method according to an embodiment of this application;
FIG. 7 is a flowchart of another data processing method according to an embodiment of this application;
FIG. 8 is a schematic diagram of another data processing method according to an embodiment of this application;
FIG. 9 is a schematic diagram of another data processing method according to an embodiment of this application;
FIG. 10 is a structural diagram of a data processing apparatus according to this application;
FIG. 11 is a structural diagram of another data processing apparatus according to this application;
FIG. 12 is a structural diagram of another data processing apparatus according to this application;
FIG. 13 is a structural diagram of another data processing apparatus according to this application; and
FIG. 14 is a structural diagram of another communication device according to this application.

### DETAILED DESCRIPTION

The following clearly and completely describes the technical solutions in the embodiments of this application with reference to the accompanying drawings in the embodiments of this application. Apparently, the described embodiments are some of the embodiments of this application rather than all of the embodiments. All other embodiments derived by a person of ordinary skill in the art based on the embodiments of this application without creative efforts shall fall within the protection scope of this application.

In the specification and claims of this application, the terms "comprise" and any variants thereof are intended to cover a non-exclusive inclusion. For example, a process, method, system, product, or device that includes a series of steps or units is not necessarily limited to those steps or units that are clearly listed, but may include other steps or units not clearly listed or inherent to such a process, method, product, or device. In addition, the term "and/or" used in the specification and claims represent at least one of the connected objects. For example, A and/or B may represent the following three cases: Only A exists, only B exists, and both A and B exist.

In the embodiments of this application, the terms such as "exemplary" and "for example" are used to represent giving an example, an illustration, or a description. Any embodiment or design scheme described as "exemplary" or "for example" in the embodiments of this application should not be construed as being preferred or superior to other embodiments or design schemes. To be specific, the use of the terms such as "exemplary" or "for example" is intended to present a related concept in a specific manner.

The technologies described in the present disclosure are not limited to a 5th generation mobile communication (5th-generation, 5G) system and an evolution-advanced communication system, is not limited to an LTE/LTE-advanced (LTE-Advanced, LTE-A) system, and may further be applied to various wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single-carrier Frequency-Division Multiple Access, SC-FDMA), and other systems.

The terms "system" and "network" may usually be used interchangeably. A CDMA system can implement radio technologies such as CDMA2000 and Universal Terrestrial Radio Access (Universal Terrestrial Radio Access, UTRA). UTRA includes broadband CDMA (Wideband Code Division Multiple Access, WCDMA) and other CDMA variants. A TDMA system can implement radio technologies such as Global System for Mobile Communications (Global System for Mobile Communication, GSM). An OFDMA system can implement radio technologies such as ultra mobile broadband (Ultra Mobile Broadband, UMB), evolution UTRA (Evolution-UTRA, E-UTRA), IEEE 802. 11 (Wi-Fi), IEEE 802. 16 (WiMAX), IEEE 802. 20, and Flash-OFDM. UTRA and E-UTRA are parts of a universal mobile telecommunications system (Universal Mobile Telecommunications System, UMTS). LTE and LTE-advanced (for example, LTE-A) are new releases of UMTS using E-UTRA. UTRA, E-UTRA, UMTS, LTE, LTE-A, and GSM are described in documents of an organization named "3rd Generation Partnership Project" (3rd Generation Partnership Project, 3GPP). CDMA2000 and UMB are described in documents of an organization named "3rd Generation Partnership Project 2" (3GPP2). The technology described in the specification can be applied to the systems and radio technologies mentioned above, and can also be applied to other systems and radio technologies.

In the related art, packet loss processing and the like after Extended Reality (Extended Reality, XR) data packet scheduling fails are discussed. However, a mobile communication system (for example, the fifth generation System, 5GS) is just a segment of a transmission path between a client (Client) and a server (Server), and a user plane function (User Plane Function, UPF) may be missing when an XR data packet is received, in other words, the XR data packet is lost on a previous transmission path. After entering the 5GS, packet loss may also occur in a transmission network between a radio access network (Radio Access Network, RAN) and the UPF, resulting in missing when the RAN receives protocol data unit (Protocol Data Unit, PDU) set (Set) data. In a scenario with a missing data packet, how to detect missing data and process incompletely received data are urgent problems to be resolved.

For ease of better understanding of the embodiments of this application, the following technical points are first described.

### 1.1: From an angle of the UPF:

An XR media data stream is formed by a string of continuous data, and the UPF may recognize, when receiving a PDU, a slice (slice) and frame to which the PDU belongs. The UPF may find that a specific PDU is missing. The missing may be due to out-of-order reception or loss on a previous transmission path due to congestion and the like.

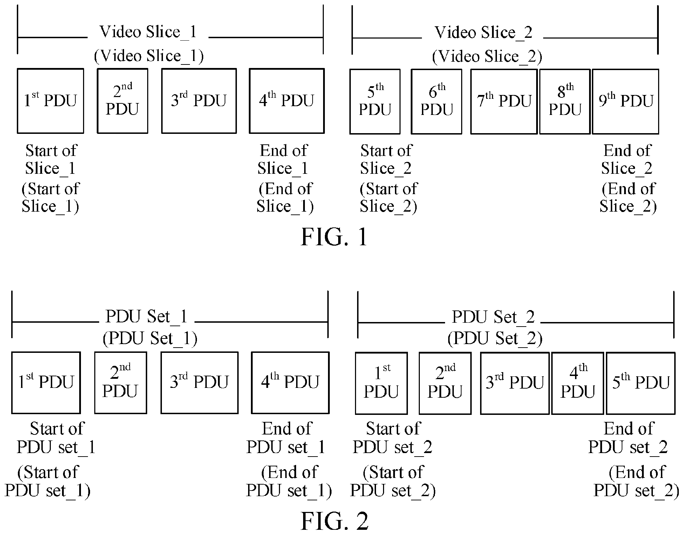

To eliminate interference of out-of-order reception to the missing of the missing PDU, the UPF needs to reorder the PDUs and then push the PDUs to the RAN. As shown in FIG. 1, for example, when a 1^{st} PDU, a 2^{nd} PDU, a 3^{rd} PDU, and a 5^{th} PDU are received, the 1^{st} PDU, the 2^{nd} PDU, and the 3^{rd} PDU may be first pushed to the RAN, and then a 4^{th} PDU may be waited for a while. If the 4^{th} PDU is still not received after timeout, it is determined that the 4^{th} PDU is missing. Each PDU in an existing real-time transport protocol (Real-time Transport Protocol, RTP) protocol packet header carries a serial number (Serial Number, SN). A first packet of a frame (Frame) or a slice (Slice) may have a label "S", and a last packet of the Frame/Slice has a label "M". Therefore, this can help the UPF recognize a scenario with a missing PDU.

A scenario in which the Frame or the Slice is incomplete and the PDU is missing may include at least one of the following:
Scenario 1: A part of PDUs of an XR data unit (for example, the frame or the slice) is missing.
Scenario 2: An entire XR data unit (for example, the frame or the slice) is missing.
Scenario 3: One or more first PDUs of an XR data unit (for example, the frame or the slice) are missing.

### 1.1.1: Packet loss processing

Scenario 1: A part of PDUs of an XR data unit (for example, the frame or the slice) is missing.

In an XR research, there is a scenario in which decoding can be performed only when all data packets of the frame or the slice are completely received. It is not difficult to understand that, in this case, if the data packet of the frame or the slice is missing, decoding cannot be performed. In this case, another data packet of the frame or the slice does not need to be continuously transmitted.

Scenario 2: An entire XR data unit (for example, the frame or the slice) is missing.

If an entire I slice is missing, a P slice and a B slice that depend on the I slice also do not need to be continuously transmitted. The P slice and the B slice that depend on the I slice are a P slice and a B slice before a next I slice, for example, I slice, P slice, B slice, B slice, I slice.

Scenario 3: One or more first PDUs of an XR data unit (for example, the frame or the slice) are missing.

According to LS of SA4, first few PDUs of the slice are more important. If the PDUs cannot be received, decoding cannot be performed. Therefore, if the first PDU is missing, another PDU of the Frame or the Slice does not need to be transmitted.

### 1.2: From an angle of the RAN:

### 1.2.1: Packet loss processing

Scenario 1: A part of PDUs of a PDU Set is missing.

As shown in FIG. 2, a first PDU Set (PDU Set 1) includes a 1^{st} PDU, a 2^{nd} PDU, a 3^{rd} PDU, and a 4^{th} PDU, where the 1^{st} PDU is a first packet of the first PDU Set, and the 4^{th} PDU is a last packet of the first PDU Set. A second PDU Set (PDU Set_2) includes a 1^{st} PDU, a 2^{nd} PDU, a 3^{rd} PDU, a 4^{th} PDU, and a 5^{th} PDU, where the 1^{st} PDU is a first packet of the second PDU Set, and the 5^{th} PDU is a last packet of the second PDU Set. The RAN receives an indication, and the indication indicates to require the RAN to discard a packet of the PDU Set_1 received before or indicates that the PDU Set_1 is incomplete. The indication is carried in a header (header) of a PDU of the PDU Set_1. When the PDU is a dummy PDU, the RAN deletes a dummy header.

A specific packet of the PDU Set is missing due to congestion of a transmission network between the RAN and the UPF. The RAN may perform recognition by reading header information of the PDU Set. For example, there is no first packet indication, there is no last packet indication, or packets within the PDU Set are not continuous.

Scenario 2: An entire first PDU Set is missing.

In this scenario, another PDU Set depending on the first PDU Set also does not need to be continuously transmitted. The PDU Set depending on the first PDU Set may be a PDU Set (a P slice and a B slice before an I slice, for example, a PDU Set mapped by a P slice, a B slice, and a B slice in "I slice, P slice, B slice, B slice, I slice") with a secondary priority of a next first PDU Set.

Scenario 3: One or more first PDUs of a first PDU Set are missing.

In a scenario, first few PDUs of the slice are more important. If the PDUs cannot be received, decoding cannot be performed. Therefore, if the first PDU is missing, another PDU of the Frame or the Slice does not need to be transmitted.

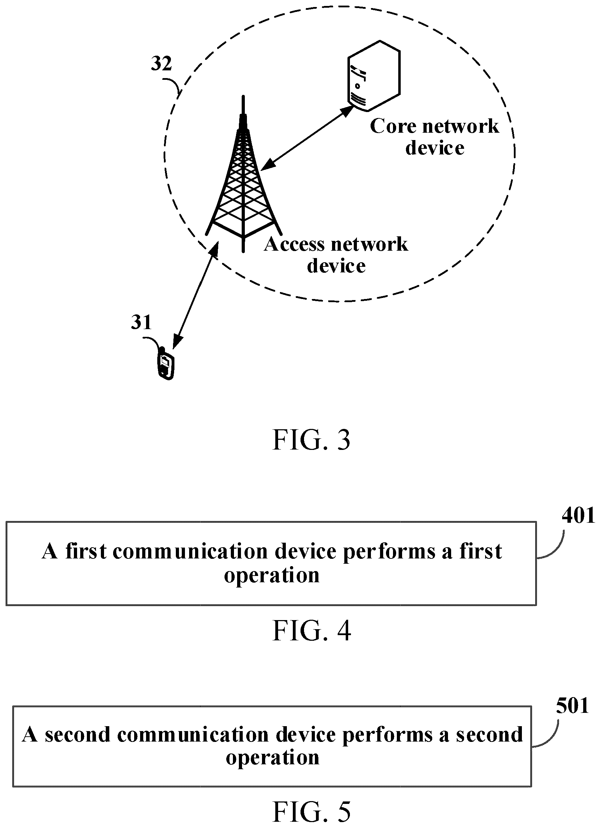

FIG. 3 is a schematic architectural diagram of a wireless communication system according to an embodiment of this application. The wireless communication system includes a terminal 31 and a network side device 32. The terminal 31 may be a terminal side device, such as a mobile phone, a tablet personal computer (Tablet Personal Computer), a laptop computer (Laptop Computer), alternatively referred to as a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (Augmented Reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart household (a home device, such as a refrigerator, a TV, a washing machine, or furniture, with a wireless communication function), a game console, a personal computer (personal computer, PC), a teller machine, or an automated machine. The wearable device includes: a smart watch, a smart hand ring, a smart headset, a pair of smart glasses, smart jewelry (a smart bangle, a smart bracelet, a smart ring, a smart necklace, a smart ankle bangle, a smart anklet, or the like), a smart wristband, smart clothing, a game console, and the like. It is to be noted that, a specific type of the terminal 31 is not limited in the embodiments of this application.

The network side device 32 may include an access network device or a core network device. Alternatively, the access network device may be referred to as a radio access network device, a radio access network (Radio Access Network, RAN), a radio access network function, or a radio access network unit. The access network device may include a base station, a WLAN access point, or a Wi-Fi node. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a B-node, an evolved NodeB (Evolved Node B, eNB), a home NodeB, a home evolved NodeB, a wireless local area network (Wireless Local Area Network, WLAN) access point, a wireless fidelity (Wireless Fidelity, Wi-Fi) node, a transmitting receiving point (Transmitting Receiving Point, TRP), or another proper term in the field as long as reaching the same technical effect. The base station is not limited to a specific technical vocabulary. It is to be noted that, only a base station in a new radio (New Radio, NR) system is used as an example for description in the embodiments of this application, but a specific type of the base station is not limited. The core network device may include, but not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It is to be noted that, only a core network device in the NR system is used as an example for description in the embodiments of this application, but a specific type of the core network device is not limited.

Optionally, obtaining may be understood as obtaining from a configuration, receiving, receiving after a request, obtaining through self-learning, obtaining by deduction based on information not received, or obtaining by processing based on received information. A specific case may be determined according to an actual need and is not limited in the embodiments of this application. For example, when indication information of a specific capability sent by a device is not received, it may be deducted that the device does not support the capability.

Optionally, sending may include broadcasting, broadcasting in a system message, returning after responding to a request.

In an optional embodiment of this application, a communication device may include at least one of the following: a communication network element and a terminal.

In an embodiment of this application, the communication network element may include at least one of the following: a core network element and a radio access network network element.

In this embodiment of this application, the core network (Core Network, CN) network element may include, but not limited to, at least one of the following: a core network device, a core network node, a core network function, a core network element, a mobility management entity (Mobility Management Entity, MME), an access and mobility management function (Access and Mobility Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function (Policy and Charging Rules Function, PCRF), a serving GPRS support node (Serving GPRS Support Node, SGSN), a gateway GPRS Support Node (Gateway GPRS Support Node, GGSN), an application function (Application Function, AF), and a network exposure function (Network Exposure Function, NEF).

In this embodiment of this application, the RAN network element may include, but not limited to, at least one of the following: a radio access network device, a radio access network node, a radio access network function, a radio access network unit, a 3GPP radio access network, a non-3GPP radio access network, a centralized unit (Centralized Unit, CU), a distributed unit (Distributed Unit, DU), a base station, an evolved NodeB (evolved Node B, eNB), a 5G base station (gNB), a radio network controller (Radio Network Controller, RNC), a base station (NodeB), a non-3GPP interworking function (Non-3GPP Inter Working Function, N3IWF), an access controller (Access Controller, AC) node, an access point (Access Point, AP) device or a wireless local area network (Wireless Local Area Networks, WLAN) node, and the N3IWF.

The base station may be a base station (BTS, Base Transceiver Station) in the GSM or CDMA, may alternatively be a base station (NodeB) in the WCDMA, or may be an evolved NodeB (eNB or e-NodeB, evolutional Node B) in the LTE or a 5G base station (gNB). This is not limited in this embodiment of this application.

In an optional embodiment of this application, the terminal may include a relay supporting a terminal function and/or a terminal supporting a relay function. The terminal may alternatively be referred to as a terminal device or user equipment (User Equipment, UE). The terminal may be a terminal side device, such as a mobile phone, a tablet personal computer (Tablet Personal Computer), a laptop computer (Laptop Computer), a personal digital assistant (Personal Digital Assistant, PDA), a mobile Internet device (Mobile Internet Device, MID), a wearable device (Wearable Device), or an in-vehicle device. It is to be noted that, a specific type of the terminal is not limited in the embodiments of this application.

In an embodiment of this application, a data set to which a data packet belongs includes a data set indicated by a data set sequence number carried by the data packet. The data packet may be referred to as a data packet of the data set.

In an embodiment of this application, that all data packets in an X^{th} object require complete processing includes at least one of the following:
a receiver requires all data packets of the X^{th} object;
no data packet in the X^{th} object can be missing; and
when any data packet in the X^{th} object is missing, other data of the X^{th} object does not need to be transmitted (for example, may be discarded).

In an embodiment of this application, that a header data packet in a Y^{th} object requires complete processing includes at least one of the following:
a receiver requires all header data packets of the Y^{th} object;
no header data packet in the Y^{th} object can be missing; and
when any header data packet in the Y^{th} object is missing, other data of the Y^{th} object does not need to be transmitted (for example, may be discarded).

In an implementation, for decoding, the receiver requires all data packets in the data unit or data set, and decoding cannot be performed if any data packet is missing. In an implementation, for decoding, the receiver requires all header data packets in the data unit or data set, and decoding cannot be performed if any header data packet is missing.

The X^{th} object or a Y^{th} object set may include: a first object and a second object.

In an implementation, the first object includes at least one of the following: a first PDU Set, a first quality of service (Quality of Service, QoS) stream, a first QoS sub-stream, a first data set category, a first data set, a second data set, a first data stream, a first data unit, and a second data unit.

In an implementation, the second object includes at least one of the following: a first PDU Set, a first QoS stream, a first QoS sub-stream, a first data set category, a third data set, and a fourth data set.

In an embodiment of this application, a data set may be one of the following: a packet data unit set PDU Set, an instance of the PDU Set, a PDU Set category, an instance of the PDU Set category, a data paragraph or a data set in a tunnel (for example, a QoS stream, a QoS sub-stream, or a radio bearer).
(1) In an implementation, a PDU Set may include a plurality of PDU Set instances. A PDU Set may be identified by using a PDU Set identifier (for example, a QoS identifier at a PDU Set level). A plurality of different PDU Set instances of a same PDU Set may be differentiated by using data set sequence numbers (for example, PDU Set sequence numbers).
(2) In another implementation, a PDU Set category may include a plurality of PDU Sets. The PDU Set is an instance of the PDU Set category. The PDU Set category may be identified by using a PDU Set identifier (for example, a QoS identifier at a PDU Set level). A plurality of different PDU Sets of a same PDU Set category may be differentiated by using data set sequence numbers (for example, PDU Set sequence numbers).

In an embodiment of this application, the data set category may be one of the following: a packet data unit set ((PDU Set), and a tunnel (for example, a QoS stream, a QoS sub-stream, or a radio bearer). One data set category may correspond to a plurality of data sets. The data set is an instance of the data set category. The data set category may be identified by using a data set category identifier. The data set category identifier is, for example, a QoS identifier at a data set level. The data set may be identified by using the data set sequence number.

In an implementation, categories of one or more data sets may be the same or different. Different categories of data sets may be differentiated by using data set identifiers. Different data sets of a same category may be differentiated by using data set sequence numbers.

In an embodiment of this application, an object in the following (1), (2), (3), and (4) may include, but not limited to, one of the following: the data set, the data unit, and the like.
(1) In an implementation, that an object is incomplete represents that data missing exists in the object. The incompleteness of the object or partial data missing of the object means that a part of data packets (for example, the PDU) in the object is missing. For example, that the data set is incomplete means that a part of data packets of the data set is missing.
(2) In an implementation, that an entire object is missing represents that all data of the object is missing. For example, that the entire data set is missing means that of all data packets of the data set are missing.
(3) In an implementation, header data of an object is one of the following: one or more data packets at a start location of the object, a first packet of the object, and all packets from the first packet to an N^{th} packet of the object. N is an integer greater than 1.
(4) In an implementation, tailer data of an object is one of the following: one or more data packets at an end location of the object, a last packet of the object, and all packets from an M^{th} packet to the last packet of the object. M is an integer greater than 1.

In an implementation, the first data stream is a service data stream. In an embodiment of this application, a data stream includes the service data stream (for example, a service data flow). The data stream may be referred to as a flow or a data flow. Optionally, the data unit is a data unit in the service data stream.

In an implementation, a data set in a second data stream is a data set in a tunnel (for example, a QoS stream). The second data stream is a data stream in the tunnel. In an optional embodiment of this application, the tunnel includes at least one of the following: a session (session) (for example, a PDU session or a session between the RAN and a CN), the QoS stream, an evolved packet system (Evolved Packet System, EPS) bearer, PDP context, a DRB, a signalling radio bearer (Signalling Radio Bearer, SRB), an IPsec association, and a GPRS tunnelling protocol (GPRS Tunnelling Protocol, GTP) tunnel (tunnel). The tunnel may be instantiated as a tunnel of any foregoing category.

In an embodiment of this application, the data unit is a data unit of an application layer, and is sent by an application client or an application server. The data unit is a data set formed by one or more data packets.

In an embodiment of this application, the data unit or a data unit category includes, but not limited to, at least one of the following: a group of pictures (Group of pictures, GoP or GOP), a video frame, a video slice, description information of a tile, a field of view (Field of View, FOV), a depth of field (Depth of Field, DoF), an audio frame, and touch information. Categories of a plurality of data units are the same (for example, a plurality of continuous B frames) or different (for example, an I frame, a P frame, and a B frame). Categories of a plurality of data units are the same (for example, a plurality of continuous B frames) or different (for example, an I frame, a P frame, and a B frame).
(1) In an implementation, a data unit may include a plurality of data unit instances. A data unit may be identified by using description information of the data unit. A plurality of different data unit instances of a same data unit may be differentiated by using boundary information (for example, a start marker, and an end marker) of the data unit.
(2) In an implementation, a data unit category may include a plurality of data units. The data unit is an instance of the data unit category. A category of data unit may be identified by using description information of the data unit. A plurality of different data units of a same data unit category may be differentiated by using boundary information (for example, a start marker, and an end marker) of the data unit.

In an embodiment of this application, a data packet size may be referred to as a data packet length.

In an embodiment of this application, the data packet may be referred to as a data frame.

In an optional embodiment of this application, description information of the data stream includes at least one of the following: description information of one or more data sets, service category information, a fully qualified domain name (Fully Qualified Domain Name, FQDN), a source IP address, a target IP address, a source port, a target end, a protocol number, a media access control (Media Access Control, MAC) address, a target MAC address, an application (Application) identifier of a service, an operating system (operating system, OS) identifier, a packet detection rule (packet detection rule, PDR), and a data network name (Data Network Name, DNN).

In an optional embodiment of this application, data and the data packet have the same meaning.

In an optional embodiment of this application, the data set and a dataset have the same meaning. One data set includes one or more pieces of data. Generally, importance of data in one data set may be the same. Importance of data in different data sets may be different.

In an optional embodiment of this application, description information of the data unit, and/or the description information of the data set include at least one of the following: an importance level, description information of the GOP (Group of pictures, GoP), description information of a frame, description information of a slice, description information of a tile, description information of an FOV, and description information of a DoF.

In an implementation, the description information of a frame includes at least one of the following: a frame category (for example, but not limited to, an I frame, a P frame, or a B frame) of the frame, and a quantity of data packets included in the frame.

In an implementation, the description information of a slice includes at least one of the following: a slice category (for example, but not limited to, an I slice, a P slice, or a B slice) of the slice, and a quantity of data packets included in the slice.

In an implementation, the description information of a tile includes at least one of the following: a tile category (for example, but not limited to, an I tile, a P tile, or a B tile) of the tile, and a quantity of data packets included in the tile.

In an implementation, the description information of a GOP includes at least one of the following: a frame category included in the GOP, an appearance order of a frame, and a quantity of included data packets.

In an optional embodiment of this application, the description information of the data stream and/or the description information of the data set may be packet filter information or data packet detection information.

Referring to FIG. 4, an embodiment of this application provides a data processing method, applied to a first communication device. The first communication device includes, but not limited to, a CN network element or a RAN network element. The CN network element includes, but not limited to, an anchor gateway (for example, a UPF). The method includes the following steps.

Step 401: A first communication device performs a first operation, where the first operation includes at least one of the following.
(1) Stop sending a data packet of a first data set to a first target end or a first target interface.

Optionally, the first target end includes at least one of the following: a second communication device, the RAN network element, an intermediate UPF, and the anchor gateway.

Optionally, the first target interface includes at least one of the following: an interface (for example, an N3 interface) between the first communication device and the second communication device, and an interface (for example, an N9 interface) between the first communication device and an intermediate communication device. The intermediate communication device is located between the first communication device and the second communication device.

Optionally, the data packet of the first data set is downlink data. In another implementation, the data packet of the first data set is uplink data.

(2) Discard the data packet of the first data set in the first communication device.

(3) Discard a data packet of a first data unit not mapped into the first data set in the first communication device.

In an implementation, the first data unit is data received from an N6 interface or a terminal.

(4) Stop a relevant operation of the first data set.

(5) Send a first indication, where the first indication indicates at least one of the following: a data set ending, a data packet carrying the first indication being an end data packet of the data set, the data set being incomplete, requiring stopping transmission of a data packet of the data set; and the data set is the first data set,

where the first indication is first indication information corresponding to the first data set, and the first data set includes one or more data packets.

In an implementation of this application, an operation of the sending a first indication includes one of the following:
(1) a first relevant operation, where the first relevant operation includes at least one of the following: generating a first dummy (dummy) data packet of the first data set, where the first dummy data packet carries the first indication; and sending the first dummy data packet; or
(2) a second relevant operation, where the second relevant operation includes at least one of the following: adding the first indication to a real data packet in the first data set; and sending the real data packet.

Optionally, the real data packet with the first indication added is one of the following.
(a) A data packet with a smallest sequence number after a data packet is missing.
   For example, if data packets with sequence numbers 1, 2, 4, and 5 respectively of the first data unit are received, and a data packet with a sequence number 3 is missing, a data packet carrying the first indication is the data packet with the sequence number 4.
(b) Any data packet after a data packet is missing.
   For example, if data packets with sequence numbers 1, 2, 4, and 5 respectively are received, and a data packet with a sequence number 3 is missing, a data packet carrying the first indication may be the data packet with the sequence number 4 or 5.
(c) A tailer data packet of the first data set.
   For example, a last data packet or last few data packets of the first data set.
(d) A header data packet of the first data set.

For example, a first data packet or first few data packets of the first data set.

In an implementation of this application, that the first communication device performs a first operation includes:
the first communication device obtains a second indication and/or first information; and
the first communication device performs the first operation based on the second indication and/or the first information,
where the second indication indicates at least one of the following: (a) all data packets of a first object require complete processing, and (b) all data packets of any data instance of the first object require complete processing; and
the first information includes at least one of the following: (a) a third indication, and (b) range information of a header data packet of the first object requiring complete processing. Optionally, the range information includes: a quantity of header data packets of the first object requiring complete processing, and/or a proportion of the header data packets of the first object requiring complete processing to all data packets of the first object.

The third indication indicates that the header data packet of the first object requires complete processing.

The first object includes at least one of the following: (a) a first PDU Set, (b) a first quality of service (Quality of Service, QoS) stream, (c) a first QoS sub-stream, (d) the first data set, (e) a second data set, (f) a first data stream, (g) a first data unit, (h) a second data unit, and (i) a first data set category.

The data instance of the first object includes at least one of the following: (a) a data set, (b) a data unit, (c) the first data set, (d) the second data set, (e) the first data stream, (f) the first data unit, and (g) the second data unit.

In an implementation, the first object is the first PDU Set.

The first data set is a data instance of a PDU Set. For example, a type of PDU Set is identified by using a PDU Set identifier (Identifier), and a type of PDU Set may include one or more data sets. For example, data mapped by the first PDU Set is a B slice (slice), and the first communication device receives three B slices. The three B slices may be respectively mapped into three data sets, and the three data sets may be differentiated by using different data set sequence numbers. It is not difficult to understand that the three data sets are three instances of the first PDU Set.

In another implementation, the first object is the first QoS sub-stream, and the data set is a PDU Set. The PDU Set is a data instance (for example, a data paragraph formed by one or more data packets) of the first QoS sub-stream. For example, data mapped by the first QoS sub-stream is a B slice, and the first communication device receives three B slices. The three B slices are respectively mapped into three PDU Sets. The three PDU Sets may be differentiated by using different PDU Set sequence numbers. It is not difficult to understand that the three PDU Sets are three data instances of the first QoS sub-stream.

In another implementation, the first object is the first data stream, and the data unit is a data instance (for example, a data paragraph formed by one or more data packets) of the first data stream. For example, data mapped by the first data stream is a B slice, and the first communication device receives three B slices. It is not difficult to understand that the three B slices are three data instances of the first data stream.

The foregoing "all data packets require complete processing" represents at least one of the following: (a) all data packets are sent together, (b) all data packets are received together, and (c) no data packet can be missing.

In some scenarios, all data packets are to be successfully received before decoding can be performed. It is not difficult to understand that, in a transmission scenario, once a data packet is missing, there is no point in transmitting another data packet.

The foregoing "the header data packet requires complete processing" or "the header data packet of the first object requiring complete processing" represents at least one of the following: (a) all header data packets are sent together, (b) all header data packets are received together, and (c) no header data packet can be missing.

In some scenarios, only when all header data packets are successfully received, decoding can be performed. It is not difficult to understand that, in a transmission scenario, once a header data packet is missing, there is no point in transmitting another data packet.

In an implementation of this application, that the first communication device performs a first operation includes:
the first communication device performs the first operation when a first condition is satisfied, where
the first condition includes at least one of the following:
   (1) a part of data packets of the first data unit is missing, or a header data packet of the first data unit is missing;
   (2) all data packets of the first data unit require complete processing, or the header data packet of the first data unit requires complete processing;
   (3) the entire second data unit is missing, or a part of data packets of the second data unit is missing, or a header data packet of the second data unit is missing, or the header data packet of the second data unit fails to be transmitted;
   (4) all data packets of the second data unit require complete processing, or the header data packet of the first data unit requires complete processing;
   (5) a part of data packets of the first data set is missing, or a header data packet of the first data set is missing, the header data packet of the first data set fails to be transmitted;
   (6) all data packets of the first data set require complete processing, or the header data packet of the first data set requires complete processing;
   (7) the entire second data set is missing, or a part of data packets of the second data set is missing, or a header data packet of the second data set is missing, or the header data packet of the second data set fails to be transmitted; and
   (8) all data packets of the second data set require complete processing, or the header data packet of the second data set requires complete processing,
where the second data unit is a data unit on which the first data unit depends.

In an implementation, that the second data unit is a data unit on which the first data unit depends means that the first data unit can perform decoding only when the second data unit exists or successfully performs decoding.

The second data set is a data set on which the first data set depends.

In an implementation, that the second data set is a data set on which the first data set depends means that data in the first data set can be decoded only when data in the second data set exists or is successfully decoded.

In an implementation of this application, the relevant operation of the first data set includes at least one of the following.
(1) Reorder a received data packet.
(2) Map the received data packet into the data set, and add header information related to the data set to the data packet.
   Optionally, the adding header information related to the data set to the data packet includes, but not limited to, at least one of the following: (a) adding a sequence number of a data set into which the data packet is mapped to the data packet, (b) adding a packet sequence number in a data set into which the data packet is mapped to the data packet, (c) adding a start marker to a header data packet; and (d) adding a start marker to a tailer data packet.
(3) Assign a sequence number of the data set.
(4) Assign a packet sequence number in the data set.
(5) Send the data packet to the second communication device according to the sequence number of the data set to which the data packet belongs and/or an order of the packet sequence number in the data set.

In an implementation of this application, that the first communication device sends the first indication includes that the first communication device sends the first indication to the first target end. Optionally, the first target end includes at least one of the following: the second communication device, the RAN network element, a user plane network element (for example, the intermediate UPF or the anchor gate way), and a terminal.

In an implementation, when the first communication device is the RAN network element, the first target end includes at least one of the following: the second communication device, the user plane network element (for example, the intermediate UPF or the anchor gate way), and the terminal.

In another implementation, when the first communication device is the anchor gate way (for example, a UPF), the first target end includes at least one of the following: the second communication device, the intermediate UPF, and the RAN network element.

In an implementation, that the first communication device obtains a second indication and/or first information includes: the first communication device receives the second indication and/or the first information from a first source end.

The first source end includes at least one of the following: a fourth communication device, an AMF, an SMF, a PCF, an NEF, and an AF.

Through the embodiments of this application, behaviors of the first communication device in detecting data missing and processing incomplete received data in a scenario with a data packet missing are standardized, and reliability of a communication system is improved.

Referring to FIG. 5, an embodiment of this application provides a data processing method, applied to a second communication device. The second communication device includes, but not limited to, a CN network element, or a RAN network element. The CN network element includes, but not limited to, an anchor gate way (UPF). The method includes the following steps.

Step 501: The second communication device performs a second operation, where the second operation includes at least one of the following.
(1) Stop sending a data packet of a third data set to a second target end.
   Optionally, the second target end includes at least one of the following: a third communication device, the RAN network element, an intermediate UPF, and the anchor gate way (for example, the UPF).
(2) Discard the data packet of the third data set in the second communication device.
(3) Send a fourth indication to the second target end, where the fourth indication indicates at least one of the following: (a) a data set ending, (b) a data packet carrying the fourth indication being an end data packet of the data set, (c) the data set being incomplete, and (d) stopping receiving or stopping waiting for the data packet of the data set. The data set is the third data set.

The fourth indication is fourth indication information corresponding to the third data set, and the third data set includes one or more data packets.

In an implementation of this application, that the second communication device performs a second operation includes:
the second communication device obtains a fifth indication and/or second information; and
the second communication device performs the second operation based on the fifth indication and/or the second information,
where the fifth indication indicates at least one of the following: (a) all data packets of a second object require complete processing, and (b) all data packets of any data instance of the second object require complete processing; and
the second information includes at least one of the following: (a) a sixth indication, and (b) range information of a header data packet of the second object requiring complete processing. Optionally, the range information includes: a quantity of header data packets of the second object requiring complete processing, and/or a proportion of the header data packets of the second object requiring complete processing to all data packets of the second object.

The sixth indication indicates that the header data packet of the second object requires complete processing.

The second object includes at least one of the following: (a) a first PDU Set, (b) a first QoS stream, (c) a first QoS sub-stream, (d) a third data set, (e) a fourth data set, and (h) a first data set category.

The data instance of the second object includes at least one of the following: the data set, the third data set, and the fourth data set.

The fourth data set is a data set on which the third data set depends.

In an implementation, that all data packets require complete processing represents at least one of the following: all data packets are sent together, all data packets are received together, and no data packet can be missing. In some scenarios, all data packets are to be successfully received before decoding can be performed. It is not difficult to understand that, in a transmission scenario, once a data packet is missing, there is no point in transmitting another data packet.

In an implementation, that the header data packet requires complete processing, or the header data packet requiring complete processing represents at least one of the following: all header data packets are sent together, all header data packets are received together, and no header data packet can be missing. In some scenarios, only when header data packets are successfully received, decoding can be performed. It is not difficult to understand that, in a transmission scenario, once a header data packet is missing or fails to be transmitted, there is no point in transmitting another data packet.

In an implementation, that the fourth data set is a data set on which the third data set depends means that data in the third data set can be decoded only when data in the fourth data set exists or is successfully decoded.

In an implementation of this application, that the second communication device performs a second operation includes:
the second communication device obtains a first indication; and
the second communication device performs the second operation based on the first indication,
where the first indication indicates at least one of the following: a data set ending, a data packet carrying the first indication being an end data packet of the data set, the data set being incomplete, requiring stopping transmission of a data packet of the data set; and the data set is the third data set or the fourth data set,
where the first indication is first indication information corresponding to the third data set or the fourth data set.

It is not difficult to understand that, in this case, the third data set or the fourth data set is equivalent to a first data set.

In an implementation of this application, that the second communication device performs a second operation includes:
the second communication device performs the second operation when a second condition is satisfied.

The second condition includes at least one of the following:
(1) a part of data packets of the third data set is missing, or a header data packet of the third data set is missing, or the header data packet of the third data set fails to be transmitted;
(2) all data packets of the third data set require complete processing, or the header data packet of the third data set requires complete processing;
(3) the entire fourth data set is missing, or a part of data packets of the fourth data set is missing, or a header data packet of the fourth data set is missing, or the header data packet of the fourth data set fails to be transmitted;
(4) all data packets of the fourth data set require complete processing, or the header data packet of the fourth data set requires complete processing;
(5) the first indication is obtained; and
(6) the fifth indication and/or the second information is obtained.

The fourth data set is a data set on which the third data set depends.

In an implementation of this application, the method further includes at least one of the following:
(1) the second communication device determines, based on a data packet corresponding to a packet sequence number in a third object with a missing part, that a part of data packets of the third object is missing; and
(2) the second communication device determines, based on a data packet corresponding to a header packet sequence number in a third object with a missing part, that a header data packet of the third object is missing,
where
the third object includes at least one of the following: the third data set, and the fourth data set.

In an implementation of this application, the method further includes:
the second communication device obtains the first indication; and
the second communication device determines, based on the first indication, that a part of data packets of the third data set is missing, or a part of data packets of the fourth data set is missing,
where the first indication indicates at least one of the following: (a) a data set ending, (b) a data packet carrying the first indication being an end data packet of the data set, (c) the data set being incomplete, and (d) requiring stopping transmission of a data packet of the data set; and the data set is the third data set or the fourth data set,
where the first indication is first indication information corresponding to the third data set or the fourth data set.

In an implementation, that the second communication device sends the fourth indication includes that the second communication device sends the fourth indication to the second target end.

Optionally, when the second communication device is the RAN network element, the second target end includes at least one of the following: a third communication device, the RAN network element, and the anchor gate way (for example, the UPF).

Optionally, when the second communication device is the anchor gate way (for example, the UPF), the second target end includes at least one of the following: the third communication device, the intermediate UPF, and the RAN network element.

In an implementation, that the second communication device obtains a fifth indication and/or second information includes: the second communication device receives the fifth indication and/or the second information from a second source end.

Optionally, the second source end includes at least one of the following: a fourth communication device, an AMF, an SMF, a PCF, an NEF, and an AF.

In an implementation, that the second communication device obtains a first indication includes: the second communication device receives the first indication from the third source end.

Optionally, the third source end includes at least one of the following: the first communication device, the UPF, the RAN network element, a user plane network element (for example, the intermediate UPF or the anchor gate way), and a terminal.

In an implementation, when the second communication device is the RAN network element, the third source end includes at least one of the following: the first communication device, the user plane network element (for example, the intermediate UPF or the anchor gate way), and the terminal.

In another implementation, when the second communication device is the anchor gate way, the third source end includes at least one of the following: the first communication device, the intermediate UPF, and the RAN network element.

In the embodiments of this application, behaviors of the second communication device in detecting data missing and processing incomplete received data in a scenario with a data packet missing are standardized, and reliability of a communication system is improved.

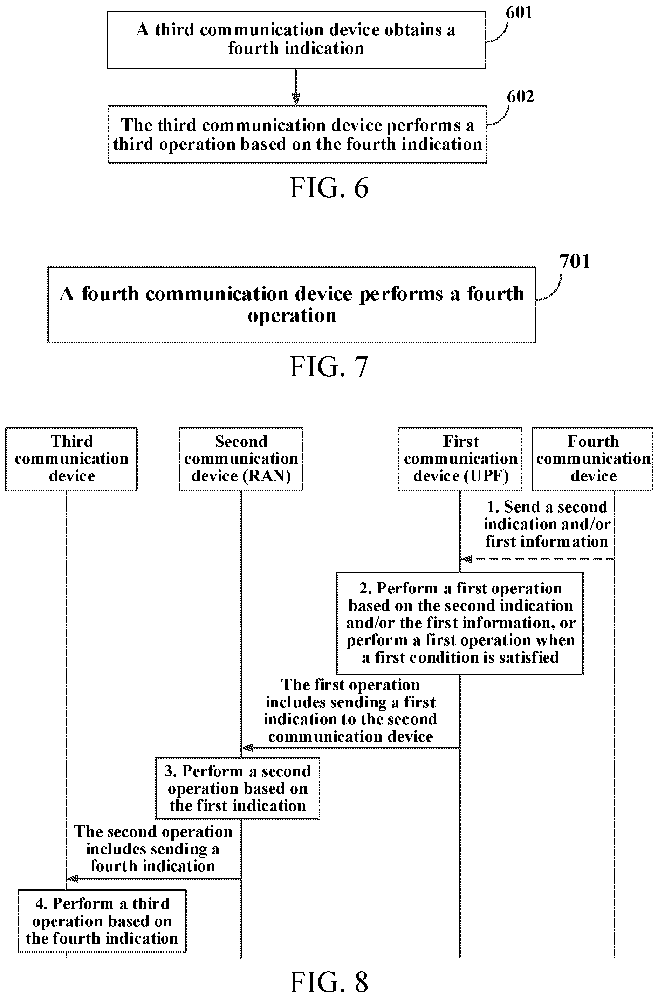

Referring to FIG. 6, an embodiment of this application provides a data processing method, applied to a third communication device. The third communication device includes, but not limited to, a CN network element, or a terminal. The CN network element includes, but not limited to, an AF or an NEF. The method includes the following steps.

Step 601: The third communication device obtains a fourth indication.

Step 602: The third communication device performs a third operation based on the fourth indication.

The third operation includes at least one of the following:
(1) stopping waiting for a data packet of a third data set;
(2) notifying an application layer, or decoding, by an application layer, a third data unit; and
(3) notifying the application layer, or discarding, by the application layer, a data packet of the third data unit,
where
the third data unit is a data unit corresponding to the third data set.

In an implementation of this application, the fourth indication indicates at least one of the following: a data set ending, a data packet carrying the fourth indication being an end data packet of the data set, the data set being incomplete, stopping receiving or stopping waiting for the data packet of the data set; and the data set is the third data set,
where the fourth indication is fourth indication information corresponding to the third data set; and
the third data set includes one or more data packets.

In an implementation, that the third communication device obtains a fourth indication includes: the third communication device receives the fourth indication from a fourth source end.

Optionally, the fourth source end includes at least one of the following: a second communication device, a RAN network element, and an anchor gate way (for example, a UPF).

Optionally, when the third communication device is the terminal, the fourth source end includes at least one of the following: the second communication device, and the RAN network element.

Optionally, when the third communication device is the AF or the NEF, the fourth source end includes at least one of the following: the second communication device, and the anchor gate way.

In the embodiments of this application, behaviors of the third communication device in detecting data missing and processing incomplete received data in a scenario with a data packet missing are standardized, and reliability of a communication system is improved.

Referring to FIG. 7, an embodiment of this application provides a data processing method, applied to a fourth communication device. The fourth communication device includes, but not limited to, a CN network element. The CN network element includes, but not limited to, a PCF or an SMF. The method includes the following steps.

Step 701: The fourth communication device performs a fourth operation, where the fourth operation includes at least one of the following:
(1) determining at least one of the following: a second indication, first information, a fifth indication, and second information; and
(2) sending at least one of the following: the second indication, the first information, the fifth indication, and the second information,

where the second indication indicates at least one of the following: (a) all data packets of a first object require complete processing, and (b) all data packets of any data instance of the first object require complete processing; and
the first information includes at least one of the following: (a) a third indication, and (b) range information of a header data packet of the first object requiring complete processing. Optionally, the range information includes: a quantity of header data packets of the first object requiring complete processing, and/or a proportion of the header data packets of the first object requiring complete processing to all data packets of the first object.

The third indication indicates that the header data packet of the first object requires complete processing.

The first object includes at least one of the following: (a) a first PDU Set, (b) a first quality of service QoS stream, (c) a first QoS sub-stream, (d) a first data set, (e) a second data set, (f) a first data stream, (g) a first data unit, and (h) a second data unit; and
the data instance of the first object includes at least one of the following: a data set, a data unit, the first data set, the second data set, the first data stream, the first data unit, and the second data unit,
where the fifth indication indicates at least one of the following: (a) all data packets of a second object require complete processing, and (b) all data packets of any data instance of the second object require complete processing; and
the second information includes at least one of the following: (a) a sixth indication, and (b) range information of a header data packet of the second object requiring complete processing. Optionally, the range information includes: a quantity of header data packets of the second object requiring complete processing, and/or a proportion of the header data packets of the second object requiring complete processing to all data packets of the second object.

The sixth indication indicates that the header data packet of the second object requires complete processing.

The second object includes at least one of the following: (a) a first PDU Set, (b) a first QoS stream, (c) a first QoS sub-stream, (d) a third data set, and (e) a fourth data set, where the fourth data set is a data set on which the third data set depends; and
the data instance of the second object includes at least one of the following: the data set, the third data set, and the fourth data set.

In an implementation of this application, that the fourth communication device performs a fourth operation includes:
the fourth communication device obtains third information, where the third information includes at least one of the following: (a) description information of the first data stream, and (b) the sixth indication; and
the fourth communication device performs the fourth operation based on the third information,
where the sixth indication indicates at least one of the following: (a) all data packets of the first data stream require complete processing, and (b) all data packets of any data instance of the first data stream require complete processing.

In an implementation of this application, that the fourth communication device performs the fourth operation based on the third information includes at least one of the following:
the fourth communication device maps the first data stream into the first object; and
the fourth communication device maps the first data stream into the second object.

In an implementation, the fourth communication device receives the third information from a fifth source end device, and the fifth source end device includes at least one of the following: an AF and an NEF.

In the embodiments of this application, behaviors of the fourth communication device in detecting data missing and processing incomplete received data in a scenario with a data packet missing are standardized, and reliability of a communication system is improved.

The data processing method according to the embodiments of this application is described below with reference to a specific application scenario.

Referring to FIG. 8, specific steps include the following steps.

Step 1: The fourth communication device sends the second indication and/or the first information to a first communication device.

Step 2: The first communication device performs a first operation based on the second indication and/or the first information.

Alternatively, the first communication device may perform a first operation when a first condition is satisfied. In this case, step 1 is an optional step.

In this embodiment, the first operation includes at least sending a first indication to a second communication device.

Step 3: The second communication device performs a second operation based on the first indication.

Alternatively, the second communication device performs the second operation when a second condition is satisfied. In this case, step 1 and step 2 are optional steps.

In this embodiment, the second operation includes at least sending a fourth indication to a third communication device.

Step 4: The third communication device performs a third operation based on the fourth indication.

It may be understood that, for related descriptions of the second indication, the first information, the first operation, the second operation, the fourth indication, the third operation, the first condition, and the second condition, reference may be made to descriptions in embodiments shown in FIG. 4 to FIG. 7. Details are not described herein again.

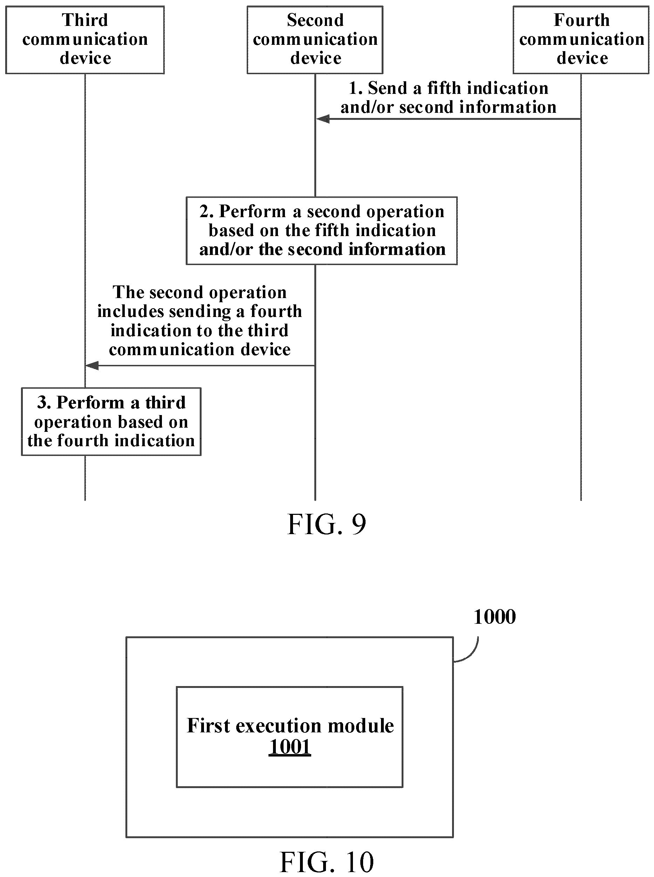

Application scenario 2 of the embodiments of this application:
Referring to FIG. 9, specific steps include the following steps.

Step 1: The fourth communication device sends the fifth indication and/or the second information to a second communication device.

Step 2: The second communication device performs a second operation based on the fifth indication and/or the second information.

Alternatively, the second communication device may perform a second operation when a second condition is satisfied. In this case, step 1 is an optional step.

**In** this embodiment, the second operation includes at least sending a fourth indication to a third communication device.

Step 3: The third communication device performs a third operation based on the fourth indication.

It may be understood that, for related descriptions of the fifth indication, the second information, the second operation, the fourth indication, the third operation, and the second condition, reference may be made to descriptions in embodiments shown in FIG. 4 to FIG. 7. Details are not described herein again.

Referring to FIG. 10, an embodiment of this application provides a data processing apparatus, used in a first communication device. The apparatus 1000 includes:
a first execution module 1001, configured to perform a first operation, where the first operation includes at least one of the following:
stopping sending a data packet of a first data set to a first target end or a first target interface;
discarding the data packet of the first data set in the first communication device;
discarding a data packet of a first data unit not mapped into the first data set in the first communication device;
stopping a relevant operation of the first data set; and
sending a first indication, where the first indication indicates at least one of the following: a data set ending, a data packet carrying the first indication being an end data packet of the data set, the data set being incomplete, and requiring stopping transmission of a data packet of the data set; and the data set is the first data set,
where
the first indication is first indication information corresponding to the first data set; and
the first data set includes one or more data packets.

In an implementation of this application, an operation of the sending a first indication includes one of the following:
a first relevant operation, where the first relevant operation includes at least one of the following: generating a first dummy data packet of the first data set, where the first dummy data packet carries the first indication; and sending the first dummy data packet; or
a second relevant operation, where the second relevant operation includes at least one of the following: adding the first indication to a real data packet in the first data set; and sending the real data packet.

In an implementation of this application, the first execution module 1001 is further configured to:
obtain a second indication and/or first information; and
perform the first operation based on the second indication and/or the first information,
where
the second indication indicates at least one of the following: all data packets of a first object require complete processing, and all data packets of any data instance of the first object require complete processing; and
the first information includes at least one of the following: a third indication, and range information of a header data packet of the first object requiring complete processing,
where
the third indication indicates that the header data packet of the first object requires complete processing,
where
the first object includes at least one of the following: a first PDU Set, a first quality of service QoS stream, a first QoS sub-stream, a first data set, a second data set, a first data stream, a first data unit, a second data unit, and a first data set category; and
the data instance of the first object includes at least one of the following: the data set, the data unit, the first data set, the second data set, the first data stream, the first data unit, and the second data unit.

In an implementation of this application, the first execution module 1001 is further configured to:
perform the first operation when a first condition is satisfied, where
the first condition includes at least one of the following:
   a part of data packets of the first data unit is missing, or a header data packet of the first data unit is missing;
   all data packets of the first data unit require complete processing, or the header data packet of the first data unit requires complete processing;
   the entire second data unit is missing, or a part of data packets of the second data unit is missing, or a header data packet of the second data unit is missing, or the header data packet of the second data unit fails to be transmitted;
   all data packets of the second data unit require complete processing, or the header data packet of the first data unit requires complete processing;
   a part of data packets of the first data set is missing, or a header data packet of the first data set is missing, the header data packet of the first data set fails to be transmitted;
   all data packets of the first data set require complete processing, or the header data packet of the first data set requires complete processing;
   the entire second data set is missing, or a part of data packets of the second data set is missing, or a header data packet of the second data set is missing, or the header data packet of the second data set fails to be transmitted; and
   all data packets of the second data set require complete processing, or the header data packet of the second data set requires complete processing,
   where the second data unit is a data unit on which the first data unit depends; and
   the second data set is a data set on which the first data set depends.

In an embodiment of this application, the relevant operation of the first data set includes at least one of the following.
reordering a received data packet;
mapping the received data packet into the data set, and adding header information related to the data set to the data packet;
assigning a sequence number of the data set;
assigning a packet sequence number in the data set; and
sending the data packet to a second communication device according to the sequence number of the data set to which the data packet belongs and/or an order of the packet sequence number in the data set.

The apparatus provided in this embodiment of this application can implement all processes implemented by the method embodiments in FIG. 4 and the same technical effects are achieved. Details are not described herein again to avoid repetition.

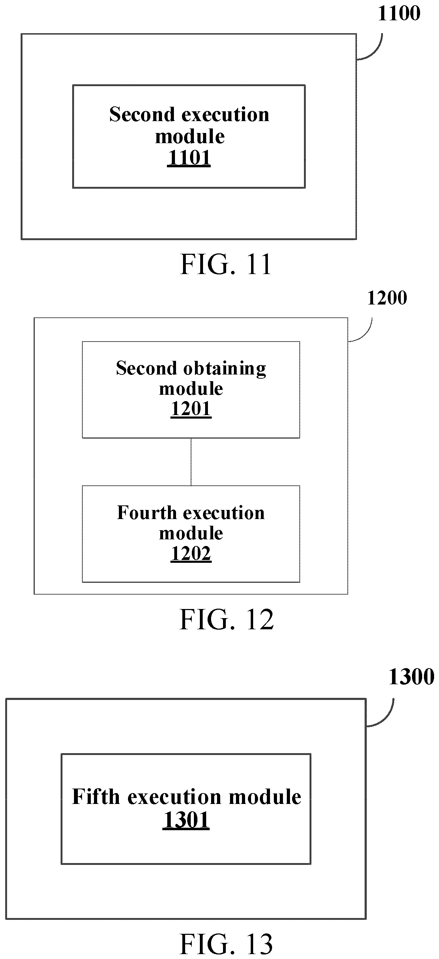

Referring to FIG. 11, an embodiment of this application provides a data processing apparatus, used in a second communication device. The apparatus 1100 includes:
a second execution module 1101, configured to perform a second operation, where the second operation includes at least one of the following:
stopping sending a data packet of a third data set to a second target end;
discarding the data packet of the third data set in the second communication device; and
sending a fourth indication, where the fourth indication indicates at least one of the following: a data set ending, a data packet carrying the fourth indication being an end data packet of the data set, the data set being incomplete, and stopping receiving or stopping waiting for the data packet of the data set; and the data set is the third data set,
where the fourth indication is fourth indication information corresponding to the third data set; and
the third data set includes one or more data packets.

In an implementation of this application, the second execution module 1101 is further configured to:
obtain a fifth indication and/or second information; and
perform the second operation based on the fifth indication and/or the second information, where
the fifth indication indicates at least one of the following: all data packets of a second object require complete processing, and all data packets of any data instance of the second object require complete processing; and
the second information includes at least one of the following: a sixth indication, and range information of a header data packet of the second object requiring complete processing, where
the sixth indication indicates that the header data packet of the second object requires complete processing, where
the second object includes at least one of the following: a first PDU Set, a first QoS stream, a first QoS sub-stream, a first data set category, a third data set, and a fourth data set, where the fourth data set is a data set on which the third data set depends; and
the data instance of the second object includes at least one of the following: the data set, the third data set, and the fourth data set.

In an implementation of this application, the second execution module 1101 is further configured to:
obtain a first indication; and
perform the second operation based on the first indication, where
the first indication indicates at least one of the following: a data set ending, a data packet carrying the first indication being an end data packet of the data set, the data set being incomplete, and requiring stopping transmission of a data packet of the data set; and the data set is the third data set or the fourth data set, where
the first indication is first indication information corresponding to the third data set or the fourth data set.

In an implementation of this application, the second execution module 1101 is further configured to:
perform the second operation when a second condition is satisfied, where
the second condition includes at least one of the following:
   a part of data packets of the third data set is missing, or a header data packet of the third data set is missing, or the header data packet of the third data set fails to be transmitted;
   all data packets of the third data set require complete processing, or the header data packet of the third data set requires complete processing,
   the entire fourth data set is missing, or a part of data packets of the fourth data set is missing, or a header data packet of the fourth data set is missing, or the header data packet of the fourth data set fails to be transmitted;
   all data packets of the fourth data set require complete processing, or the header data packet of the fourth data set requires complete processing;
   the first indication is obtained; and
   the fifth indication and/or the second information is obtained. In an implementation of this application, the apparatus 1100 further includes:
      a third execution module, configured to perform at least one of the following:
      determining, by the second communication device, based on a data packet corresponding to a packet sequence number in a third object with a missing part, that a part of data packets of the third object is missing; and
      determining, by the second communication device, based on a data packet corresponding to a header packet sequence number in a third object with a missing part, that a header data packet of the third object is missing, where
      the third object includes at least one of the following: the third data set, and the fourth data set.

In an implementation of this application, the apparatus 1100 further includes:
a first obtaining module, configured to obtain the first indication; and
a determining module, configured to determine, based on the first indication, that a part of data packets of the third data set is missing, or a part of data packets of the fourth data set is missing, where
the first indication indicates at least one of the following: a data set ending, a data packet carrying the first indication being an end data packet of the data set, the data set being incomplete, and requiring stopping transmission of a data packet of the data set; and the data set is the third data set or the fourth data set, where
the first indication is first indication information corresponding to the third data set or the fourth data set.

The apparatus provided in this embodiment of this application can implement all processes implemented by the method embodiments in FIG. 5 and the same technical effects are achieved. Details are not described herein again to avoid repetition.

Referring to FIG. 12, an embodiment of this application provides a data processing apparatus, used in a third communication device. The apparatus 1200 includes:
a second obtaining module 1201, configured to obtain a fourth indication; and
a fourth execution module 1202, configured to perform a third operation based on the fourth indication,
where
the third operation includes at least one of the following:
   stopping waiting for a data packet of a third data set;
   notifying an application layer, or decoding, by an application layer, a third data unit; and
   notifying the application layer, or discarding, by the application layer, a data packet of the third data unit,
   where
   the third data unit is a data unit corresponding to the third data set.

In an implementation of this application, the fourth indication indicates at least one of the following: a data set ending, a data packet carrying the fourth indication being an end data packet of the data set, the data set being incomplete, and stopping receiving or stopping waiting for the data packet of the data set; and the data set is the third data set, where
the fourth indication is fourth indication information corresponding to the third data set; and
the third data set includes one or more data packets.

The apparatus provided in this embodiment of this application can implement all processes implemented by the method embodiments in FIG. 6 and the same technical effects are achieved. Details are not described herein again to avoid repetition.

Referring to FIG. 13, an embodiment of this application provides a data processing apparatus, used in a fourth communication device. The apparatus 1300 includes:
a fifth execution module 1301, configured to perform a fourth operation, where the fourth operation includes at least one of the following:
determining at least one of the following: a second indication, first information, a fifth indication, and second information; and
sending at least one of the following: the second indication, the first information, the fifth indication, and the second information,
where
the second indication indicates at least one of the following: all data packets of a first object require complete processing, and all data packets of any data instance of the first object require complete processing; and
the first information includes at least one of the following: a third indication, and range information of a header data packet of the first object requiring complete processing, where
the third indication indicates that the header data packet of the first object requires complete processing, where
the first object includes at least one of the following: a first PDU Set, a first quality of service QoS stream, a first QoS sub-stream, a first data set, a second data set, a first data stream, a first data unit, and a second data unit; and
the data instance of the first object includes at least one of the following: a data set, a data unit, the first data set, the second data set, the first data stream, the first data unit, and the second data unit, where
the fifth indication indicates at least one of the following: all data packets of a second object require complete processing, and all data packets of any data instance of the second object require complete processing; and
the second information includes at least one of the following: a sixth indication, a quantity of header data packets of the second object requiring complete processing, and a proportion of the header data packets of the second object requiring complete processing to all data packets of the second object, where
the sixth indication indicates that the header data packet of the second object requires complete processing, where
the second object includes at least one of the following: a first PDU Set, a first QoS stream, a first QoS sub-stream, a third data set, and a fourth data set, where the fourth data set is a data set on which the third data set depends; and
the data instance of the second object includes at least one of the following: the data set, the third data set, and the fourth data set.

In an implementation of this application, the fifth execution module 1301 is further configured to:
obtain third information, where the third information includes at least one of the following: description information of the first data stream, and the sixth indication; and
perform the fourth operation based on the third information, where
the sixth indication indicates at least one of the following: all data packets of the first data stream require complete processing, and all data packets of any data instance of the first data stream require complete processing.

In an implementation of this application, the fifth execution module 1301 is further configured to perform one of the following:
mapping the first data stream into the first object; and
mapping the first data stream into the second object.

The apparatus provided in this embodiment of this application can implement all processes implemented by the method embodiments in FIG. 7 and the same technical effects are achieved. Details are not described herein again to avoid repetition.

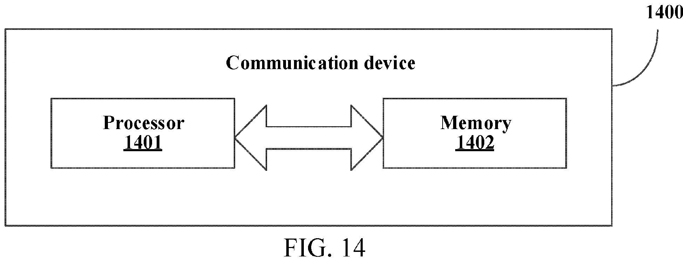

Optionally, as shown in FIG. 14, an embodiment of this application further provides a communication device 1400, including a processor 1401 and a memory 1402. A program or instructions are stored in the memory 1402 and runnable on the processor 1401. For example, when the communication device 1400 is a terminal, when the program or the instructions are executed by the processor 1401, each step of the foregoing method embodiments shown in FIG. 6 is implemented, and the same technical effects can be achieved. Details are not described herein again to avoid repetition. For example, when the communication device 1400 is a network device, when the program or the instructions are executed by the processor 1401, each step of the foregoing method embodiments shown in FIG. 4, FIG. 5, FIG. 6, or FIG. 7 is implemented, and the same technical effects can be achieved. Details are not described herein again to avoid repetition.

An embodiment of this application further provides a readable storage medium, storing a program or instructions. When the program or the instructions are executed by a processor, the method shown in FIG. 4, FIG. 5, FIG. 6, or FIG. 7 and each process of the foregoing embodiment are implemented, and the same technical effects can be achieved. Details are not described herein again to avoid repetition.

The processor is the processor in the terminal described in the above embodiment. The readable storage medium includes a computer-readable storage medium, for example, a computer read-only memory ROM, a random access memory RAM, a magnetic disk, or an optical disk.

An embodiment of this application additionally provides a chip, including a processor and a communication interface. The communication interface is coupled to the processor, and the processor is configured to run a program or instructions, to implement each process of the foregoing method embodiment shown in FIG. 4, FIG. 5, FIG. 6, or FIG. 7, and the same technical effects can be achieved. Details are not described herein again to avoid repetition.

It is to be understood that the chip mentioned in this embodiment of this application may also be referred to as a system-level chip, a system chip, a chip system, an SoC chip, or the like.

An embodiment of this application additionally provides a computer program/program product, where the computer program/program product is stored in a storage medium, and the computer program/program product is executed by at least one processor, to implement each process of the foregoing method embodiment shown in FIG. 4, FIG. 5, FIG. 6, or FIG. 7, and the same technical effects can be achieved. Details are not described herein again to avoid repetition.

An embodiment of this application additionally provides a communication system, including a terminal and a network device, where the terminal is configured to perform each process of the foregoing method embodiment in FIG. 6, and the network device is configured to perform each process of the foregoing method embodiment in FIG. 4, FIG. 5, FIG. 6, or FIG. 7, and the same technical effects can be achieved. Details are not described herein again to avoid repetition.

It is to be noted that, the term "comprise", "include" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the process, method, object, or apparatus. In addition, it is to be noted that, the scope of the method and apparatus in the embodiments of this application is not limited to performing the functions in the order shown or discussed, but may also include performing the functions in a substantially simultaneous manner or in a reverse order according to the functions involved, for example, the described method may be performed in a sequence different from the described order, and various steps may also be added, omitted, or combined. In addition, features described with reference to certain examples may be combined in other examples.

Through the description of the foregoing implementations, a person skilled in the art may clearly understand that the method according to the foregoing embodiments may be implemented by means of software and a necessary general hardware platform, and certainly, may also be implemented by hardware, but in many cases, the former manner is a better implementation. Based on such an understanding, the technical solutions of this application essentially or the part contributing to the related art may be implemented in a form of a computer software product. The computer software product is stored in a storage medium (such as a ROM/RAM, a magnetic disk, or an optical disk) and includes several instructions for instructing a terminal (which may be a mobile phone, a computer, a server, an air conditioner, a network device, or the like) to perform the methods described in the embodiments of this application.

The embodiments of this application are described above with reference to the accompanying drawings, but this application is not limited to the foregoing specific embodiments, which are merely illustrative rather than limited. Under the inspiration of this application, a person of ordinary skill in the art can make many forms without departing from the scope of this application and the protection of the claims, all of which fall within the protection of this application.

## Claims

1. A data processing method, comprising:
performing, by a first communication device, a first operation, wherein the first operation comprises at least one of the following:
stopping sending a data packet of a first data set to a first target end or a first target interface;
discarding the data packet of the first data set in the first communication device;
discarding a data packet of a first data unit not mapped into the first data set in the first communication device;
stopping a relevant operation of the first data set; and
sending a first indication, wherein the first indication indicates at least one of the following: a data set ending, a data packet carrying the first indication being an end data packet of the data set, the data set being incomplete, and requiring stopping transmission of a data packet of the data set; and the data set is the first data set,
wherein
the first indication is first indication information corresponding to the first data set; and
the first data set comprises one or more data packets.

2. The method according to claim 1, wherein an operation of the sending a first indication comprises one of the following:
a first relevant operation, wherein the first relevant operation comprises at least one of the following: generating a first dummy data packet of the first data set, wherein the first dummy data packet carries the first indication; and sending the first dummy data packet; or
a second relevant operation, wherein the second relevant operation comprises at least one of the following: adding the first indication to a real data packet in the first data set; and sending the real data packet.

3. The method according to claim 1, wherein the performing, by a first communication device, a first operation comprises:
obtaining, by the first communication device, a second indication and/or first information; and
performing, by the first communication device, the first operation based on the second indication and/or the first information,
wherein
the second indication indicates at least one of the following: all data packets of a first object require complete processing, and all data packets of any data instance of the first object require complete processing; and
the first information comprises at least one of the following: a third indication, and range information of a header data packet of the first object requiring complete processing,
wherein
the third indication indicates that the header data packet of the first object requires complete processing,
wherein
the first object comprises at least one of the following: a first packet data unit PDU Set, a first quality of service QoS stream, a first QoS sub-stream, a first data set category, the first data set, a second data set, a first data stream, the first data unit, and a second data unit; and
the data instance of the first object comprises at least one of the following: the data set, the data unit, the first data set, the second data set, the first data stream, the first data unit, and the second data unit.

4. The method according to claim 1 or 3, wherein the performing, by a first communication device, a first operation comprises:
performing, by the first communication device, the first operation when a first condition is satisfied, wherein
the first condition comprises at least one of the following:
a part of data packets of the first data unit is missing, or a header data packet of the first data unit is missing;
all data packets of the first data unit require complete processing, or the header data packet of the first data unit requires complete processing;
the entire second data unit is missing, or a part of data packets of the second data unit is missing, or a header data packet of the second data unit is missing, or the header data packet of the second data unit fails to be transmitted;
all data packets of the second data unit require complete processing, or the header data packet of the first data unit requires complete processing;
a part of data packets of the first data set is missing, or a header data packet of the first data set is missing, the header data packet of the first data set fails to be transmitted;
all data packets of the first data set require complete processing, or the header data packet of the first data set requires complete processing;
the entire second data set is missing, or a part of data packets of the second data set is missing, or a header data packet of the second data set is missing, or the header data packet of the second data set fails to be transmitted; and
all data packets of the second data set require complete processing, or the header data packet of the second data set requires complete processing,
wherein
the second data unit is a data unit on which the first data unit depends; and
the second data set is a data set on which the first data set depends.

5. The method according to claim 1, wherein the relevant operation of the first data set comprises at least one of the following:
reordering a received data packet;
mapping the received data packet into a data set, and adding header information related to the data set to the data packet;
assigning a sequence number of the data set;
assigning a packet sequence number in the data set; and
sending the data packet to a second communication device according to the sequence number of the data set to which the data packet belongs and/or an order of the packet sequence number in the data set.

6. A data processing method, comprising:
performing, by a second communication device, a second operation, wherein the second operation comprises at least one of the following:
stopping sending a data packet of a third data set to a second target end;
discarding the data packet of the third data set in the second communication device; and
sending a fourth indication, wherein the fourth indication indicates at least one of the following: a data set ending, a data packet carrying the fourth indication being an end data packet of the data set, the data set being incomplete, and stopping receiving or stopping waiting for a data packet of the data set; and the data set is the third data set,
wherein
the fourth indication is fourth indication information corresponding to the third data set; and
the third data set comprises one or more data packets.

7. The method according to claim 6, wherein the performing, by a second communication device, a second operation comprises:
obtaining, by the second communication device, a fifth indication and/or second information; and
performing, by the second communication device, the second operation based on the fifth indication and/or the second information,
wherein
the fifth indication indicates at least one of the following: all data packets of a second object require complete processing, and all data packets of any data instance of the second object require complete processing; and
the second information comprises at least one of the following: a sixth indication, and range information of a header data packet of the second object requiring complete processing,
wherein
the sixth indication indicates that the header data packet of the second object requires complete processing,
wherein
the second object comprises at least one of the following: a first PDU Set, a first QoS stream, a first QoS sub-stream, a first data set category, the third data set, and a fourth data set; and
the data instance of the second object comprises at least one of the following: the data set, the third data set, and the fourth data set.

8. The method according to claim 6, wherein the performing, by a second communication device, a second operation comprises:
obtaining, by the second communication device, a first indication; and
performing, by the second communication device, the second operation based on the first indication, wherein
the first indication indicates at least one of the following: a data set ending, a data packet carrying the first indication being an end data packet of the data set, the data set being incomplete, requiring stopping transmission of a data packet of the data set; and the data set is the third data set or a fourth data set, wherein
the first indication is first indication information corresponding to the third data set or the fourth data set.

9. The method according to claim 7 or 8, wherein the performing, by a second communication device, a second operation comprises:
performing, by the second communication device, the second operation when a second condition is satisfied, wherein
the second condition comprises at least one of the following:
a part of data packets of the third data set is missing, or a header data packet of the third data set is missing, or the header data packet of the third data set fails to be transmitted;
all data packets of the third data set require complete processing, or the header data packet of the third data set requires complete processing,
the entire fourth data set is missing, or a part of data packets of the fourth data set is missing, or a header data packet of the fourth data set is missing, or the header data packet of the fourth data set fails to be transmitted;
all data packets of the fourth data set require complete processing, or the header data packet of the fourth data set requires complete processing;
the first indication is obtained; and
the fifth indication and/or the second information is obtained.

10. The method according to claim 9, wherein the method further comprises at least one of the following:
determining, by the second communication device, based on a data packet corresponding to a packet sequence number in a third object with a missing part, that a part of data packets of the third object is missing; and
determining, by the second communication device, based on a data packet corresponding to a header packet sequence number in a third object with a missing part, that a header data packet of the third object is missing,
wherein
the third object comprises at least one of the following: the third data set, and the fourth data set.

11. The method according to claim 9, further comprising:
obtaining, by the second communication device, the first indication; and
determining, by the second communication device, based on the first indication, that a part of data packets of the third data set is missing, or a part of data packets of the fourth data set is missing,
wherein
the first indication indicates at least one of the following: a data set ending, a data packet carrying the first indication being an end data packet of the data set, the data set being incomplete, requiring stopping transmission of a data packet of the data set; and the data set is the third data set or the fourth data set, wherein
the first indication is first indication information corresponding to the third data set or the fourth data set.

12. A data processing method, comprising:
obtaining, by a third communication device, a fourth indication; and
performing, by the third communication device, a third operation based on the fourth indication,
wherein
the third operation comprises at least one of the following:
stopping waiting for a data packet of a third data set;
notifying an application layer, or decoding, by an application layer, a third data unit; and
notifying the application layer, or discarding, by the application layer, a data packet of the third data unit,
wherein
the third data unit is a data unit corresponding to the third data set.

13. The method according to claim 12, wherein the fourth indication indicates at least one of the following: a data set ending, a data packet carrying the fourth indication being an end data packet of the data set, the data set being incomplete, and stopping receiving or stopping waiting for the data packet of the data set; and the data set is the third data set, wherein
the fourth indication is fourth indication information corresponding to the third data set; and
the third data set comprises one or more data packets.

14. A data processing method, comprising:
performing, by a fourth communication device, a fourth operation, wherein the fourth operation comprises at least one of the following:
determining at least one of the following: a second indication, first information, a fifth indication, and second information; and
sending at least one of the following: the second indication, the first information, the fifth indication, and the second information,
wherein
the second indication indicates at least one of the following: all data packets of a first object require complete processing, and all data packets of any data instance of the first object require complete processing; and
the first information comprises at least one of the following: a third indication, and range information of a header data packet of the first object requiring complete processing,
wherein
the third indication indicates that the header data packet of the first object requires complete processing,
wherein
the first object comprises at least one of the following: a first PDU Set, a first quality of service QoS stream, a first QoS sub-stream, a first data set, a second data set, a first data stream, a first data unit, and a second data unit; and
the data instance of the first object comprises at least one of the following: a data set, a data unit, the first data set, the second data set, the first data stream, the first data unit, and the second data unit,
wherein
the fifth indication indicates at least one of the following: all data packets of a second object require complete processing, and all data packets of any data instance of the second object require complete processing; and
the second information comprises at least one of the following: a sixth indication, and range information of a header data packet of the second object requiring complete processing,
wherein
the sixth indication indicates that the header data packet of the second object requires complete processing,
wherein
the second object comprises at least one of the following: a first PDU Set, a first QoS stream, a first QoS sub-stream, a third data set, and a fourth data set; and
the data instance of the second object comprises at least one of the following: the data set, the third data set, and the fourth data set.

15. The method according to claim 14, wherein the performing, by a fourth communication device, a fourth operation comprises:
obtaining, by the fourth communication device, third information, wherein the third information comprises at least one of the following: description information of the first data stream, and the sixth indication; and
performing, by the fourth communication device, the fourth operation based on the third information,
wherein the sixth indication indicates at least one of the following: all data packets of the first data stream require complete processing, and all data packets of any data instance of the first data stream require complete processing.

16. The method according to claim 15, wherein the performing, by the fourth communication device, the fourth operation based on the third information comprises at least one of the following:
mapping, by the fourth communication device, the first data stream into the first object; and
mapping, by the fourth communication device, the first data stream into the second object.

17. A data processing apparatus, comprising:
a first execution module, configured to perform a first operation, wherein the first operation comprises at least one of the following:
stopping sending a data packet of a first data set to a first target end or a first target interface;
discarding the data packet of the first data set in the first communication device;
discarding a data packet of a first data unit not mapped into the first data set in the first communication device;
stopping a relevant operation of the first data set;
sending a first indication, wherein the first indication indicates at least one of the following: a data set ending, a data packet carrying the first indication being an end data packet of the data set, the data set being incomplete, requiring stopping transmission of a data packet of the data set; and the data set is the first data set,
wherein
the first indication is first indication information corresponding to the first data set; and
the first data set comprises one or more data packets.

18. A data processing apparatus, comprising:
a second execution module, configured to perform a second operation, wherein the second operation comprises at least one of the following:
stopping sending a data packet of a third data set to a second target end;
discarding the data packet of the third data set in the second communication device; and
sending a fourth indication, wherein the fourth indication indicates at least one of the following: a data set ending, a data packet carrying the fourth indication being an end data packet of the data set, the data set being incomplete, and stopping receiving or stopping waiting for a data packet of the data set; and the data set is the third data set,
wherein
the fourth indication is fourth indication information corresponding to the third data set; and
the third data set comprises one or more data packets.

19. A data processing apparatus, comprising:
a second obtaining module, configured to obtain a fourth indication; and
a fourth execution module, configured to perform a third operation based on the fourth indication,
wherein
the third operation comprises at least one of the following:
stopping waiting for a data packet of a third data set;
notifying an application layer, or decoding, by an application layer, a third data unit; and
notifying the application layer, or discarding, by the application layer, a data packet of the third data unit,
wherein the third data unit is a data unit corresponding to the third data set.

20. A data processing apparatus, comprising:
a fifth execution module, configured to perform a fourth operation, wherein the fourth operation comprises at least one of the following:
determining at least one of the following: a second indication, first information, a fifth indication, and second information; and
sending at least one of the following: the second indication, the first information, the fifth indication, and the second information,
wherein
the second indication indicates at least one of the following: all data packets of a first object require complete processing, and all data packets of any data instance of the first object require complete processing; and
the first information comprises at least one of the following: a third indication, and range information of a header data packet of the first object requiring complete processing,
wherein
the third indication indicates that the header data packet of the first object requires complete processing,
wherein
the first object comprises at least one of the following: a first PDU Set, a first quality of service QoS stream, a first QoS sub-stream, a first data set, a second data set, a first data stream, a first data unit, and a second data unit; and
the data instance of the first object comprises at least one of the following: a data set, a data unit, the first data set, the second data set, the first data stream, the first data unit, and the second data unit,
wherein
the fifth indication indicates at least one of the following: all data packets of a second object require complete processing, and all data packets of any data instance of the second object require complete processing; and
the second information comprises at least one of the following: a sixth indication, and range information of a header data packet of the second object requiring complete processing,
wherein
the sixth indication indicates that the header data packet of the second object requires complete processing,
wherein
the second object comprises at least one of the following: a first PDU Set, a first QoS stream, a first QoS sub-stream, a third data set, and a fourth data set, wherein the fourth data set is a data set on which the third data set depends; and
the data instance of the second object comprises at least one of the following: the data set, the third data set, and the fourth data set.

21. A communication device, comprising: a processor, a memory, and a program or instructions stored on the memory and runnable on the processor, wherein when the program or the instructions are executed by the processor, the steps of the data processing method according to any one of claims 1 to 16 are implemented.

22. A readable storage medium, storing a program or instructions, wherein when the program or the instructions are executed by a processor, the steps of the data processing method according to any one of claims 1 to 16 are implemented.
